# EUROPEAN PATENT APPLICATION

(11) **EP 3 778 752 A1**
(43) Date of publication of application: **17.02.2021**
(21) Application number: 19774589.6
(22) Date of filing: 05.03.2019
(51) Int. Cl.: C08L 21/00, C08J 3/205, C08J 3/24, C08K 7/06, C08L 15/02

(54) **UNCROSSLINKED ELASTOMER COMPOSITION AND CROSSLINKED PRODUCT OF SAME**

(30) Priority: 30.03.2018 JP 2018070105
(71) Applicant: Zeon Corporation, Tokyo 100-8246 (JP)
(72) Inventor: UENO Masahiro, Tokyo 100-8246 (JP); TAKEYAMA Yoshihisa, Tokyo 100-8246 (JP); YAMAGUCHI Minobu, Tokyo 100-8246 (JP)
(74) Representative: Maiwald Patent- und Rechtsanwaltsgesellschaft mbH
(86) International application number: PCT/JP2019/008688
(87) International publication number: WO 2019/188051

(57) **Abstract**

Provided is an uncrosslinked elastomer composition that can form a crosslinked product having an excellent balance of electrical conductivity and hardness. The uncrosslinked elastomer composition contains: an elastomer composition P containing an elastomer and one or more fibrous carbon nanostructures; and a liquid additive Q. When a value of (TC90_{P} - TC10_{P})/ML_{P} for the elastomer composition P is taken to be A1 and a value of (TC90 - TC10)/ML for the uncrosslinked elastomer composition is taken to be A2, a relationship formula X of A2/A1 ≥ 1.1 is satisfied.

## Description

### TECHNICAL FIELD

The present disclosure relates to an uncrosslinked elastomer composition and a crosslinked product of the same.

### BACKGROUND

Composite materials obtained by compounding a carbon material with an elastomer such as a rubber are conventionally used as materials excelling in terms of electrical conductivity, thermal conductivity, and so forth (for example, refer to Patent Literature (PTL) 1). Moreover, fibrous carbon materials, and particularly fibrous carbon nanostructures such as carbon nanotubes (hereinafter, also referred to as "CNTs" as appropriate), have been attracting attention in recent years as carbon materials that are highly effective in improving electrical conductivity.

### CITATION LIST

### Patent Literature

PTL 1: JP2016-108476A

### SUMMARY

### (Technical Problem)

However, in a situation in which a fibrous carbon material such as CNTs is compounded in an elastomer composition, increasing the amount of the fibrous carbon material in the elastomer composition improves the electrical conductivity of the elastomer composition but may also result in excessive hardness of a crosslinked product obtained through crosslinking of the elastomer composition, which has made it difficult to achieve a balance of electrical conductivity and hardness.

Accordingly, one object of the present disclosure is to provide an uncrosslinked elastomer composition that can form a crosslinked product having an excellent balance of electrical conductivity and hardness.

Another object of the present disclosure is to provide a crosslinked product having an excellent balance of electrical conductivity and hardness.

### (Solution to Problem)

As a result of diligent investigation conducted with the aim of achieving these objectives, the inventors discovered that the problem set forth above can be solved by using an uncrosslinked elastomer composition that contains an elastomer, one or more fibrous carbon nanostructures, and a liquid additive, and for which vulcanization time and torque on a vulcanization curve thereof satisfy a specific relationship. In this manner, the inventors completed the present disclosure.

Specifically, the present disclosure aims to advantageously solve the problem set forth above, and a presently disclosed uncrosslinked elastomer composition comprises: an elastomer composition P containing an elastomer and one or more fibrous carbon nanostructures; and a liquid additive Q, and when a value of (TC90_{P} - TC10_{P})/ML_{P} for the elastomer composition P is taken to be A1 and a value of (TC90 - TC10)/ML for the uncrosslinked elastomer composition is taken to be A2, a relationship formula X of A2/A1 ≥ 1.1 is satisfied. Note that when a vulcanization curve indicating a relationship between vulcanization time (units: min) and torque (units: dNm) is determined for the elastomer composition P, and a maximum value MH_{P} of the torque and a minimum value ML_{P} of the torque on the vulcanization curve are obtained, TC90_{P} is a vulcanization time (units: min) at which the torque on the vulcanization curve for the elastomer composition P is equivalent to 90% of a difference between the maximum value MH_{P} and the minimum value ML_{P} of the torque, added to the minimum value ML_{P}, and TC10_{P} is a vulcanization time (units: min) at which the torque on the vulcanization curve for the elastomer composition P is equivalent to 10% of the difference between the maximum value MH_{P} and the minimum value ML_{P} of the torque, added to the minimum value ML_{P} (with a proviso that TC10_{P} is longer than a vulcanization time (units: min) corresponding to the minimum value ML_{P} of the torque). Also note that when a vulcanization curve indicating a relationship between vulcanization time (units: min) and torque (units: dNm) is determined for the uncrosslinked elastomer composition, and a maximum value MH of the torque and a minimum value ML of the torque on the vulcanization curve are obtained, TC90 is a vulcanization time (units: min) at which the torque on the vulcanization curve for the uncrosslinked elastomer composition is equivalent to 90% of a difference between the maximum value MH and the minimum value ML of the torque, added to the minimum value ML, and TC10 is a vulcanization time (units: min) at which the torque on the vulcanization curve for the uncrosslinked elastomer composition is equivalent to 10% of the difference between the maximum value MH and the minimum value ML of the torque, added to the minimum value ML (with a proviso that TC10 is longer than a vulcanization time (units: min) corresponding to the minimum value ML of the torque). This uncrosslinked elastomer composition can form a crosslinked product having an excellent balance of electrical conductivity and hardness. In other words, by adding the liquid additive Q and adopting a configuration satisfying the relationship formula X, reduced hardness and/or increased electrical conductivity of a crosslinked product can be achieved compared to in a situation in which the liquid additive Q is not added.

Note that the vulcanization curves described above can be determined in accordance with JIS K 6300-2.

In the presently disclosed uncrosslinked elastomer composition, total surface area B (units: m²) of the fibrous carbon nanostructures contained per 100 mass (units: g) of the elastomer preferably satisfies a relationship 500 ≤ B ≤ 5,000.

Note that the total surface area B referred to in the present disclosure is the product of the specific surface area (units: m²/g) of the fibrous carbon nanostructures and the mass (units: g) of the fibrous carbon nanostructures contained per 100 mass (units: g) of the elastomer.

Through the total surface area B (units: m²) of the fibrous carbon nanostructures contained per 100 mass (units: g) of the elastomer satisfying a relationship 500 ≤ B ≤ 5,000, it is easier to achieve a balance of electrical conductivity and hardness.

In the presently disclosed uncrosslinked elastomer composition, content of the liquid additive Q is preferably not less than 1 part by mass and less than 80 parts by mass per 100 parts by mass of the elastomer. Through the content of the liquid additive Q being not less than 1 part by mass and less than 80 parts by mass per 100 parts by mass of the elastomer, it is easier to achieve a balance of electrical conductivity and hardness.

In the presently disclosed uncrosslinked elastomer composition, the elastomer is preferably a fluorine-containing elastomer. When the elastomer is a fluorine-containing elastomer, heat resistance and chemical resistance can be increased.

In the presently disclosed uncrosslinked elastomer composition, the liquid additive Q is preferably a liquid elastomer. By using a liquid elastomer as the liquid additive Q, the strength of a crosslinked product of the uncrosslinked elastomer can be maintained.

In the presently disclosed uncrosslinked elastomer composition, the liquid elastomer is preferably a fluorine-containing elastomer. By using a fluorine-containing elastomer as the elastomer and using a fluorine-containing elastomer as the liquid elastomer, the strength of a crosslinked product of the uncrosslinked elastomer can be maintained.

In the presently disclosed uncrosslinked elastomer composition, the fibrous carbon nanostructures are preferably carbon nanotubes. By using carbon nanotubes as the fibrous carbon nanostructures, it is easier to achieve a balance of electrical conductivity and hardness.

In the presently disclosed uncrosslinked elastomer composition, the carbon nanotubes may include multi-walled carbon nanotubes in a proportion of 51 or more multi-walled carbon nanotubes per 100 carbon nanotubes.

In the presently disclosed uncrosslinked elastomer composition, in a case in which the carbon nanotubes include multi-walled carbon nanotubes in a proportion of 51 or more multi-walled carbon nanotubes per 100 carbon nanotubes, the carbon nanotubes preferably have a G/D ratio of not less than 0.5 and not more than 4.

Moreover, in the presently disclosed uncrosslinked elastomer composition, in a case in which the carbon nanotubes include multi-walled carbon nanotubes in a proportion of 51 or more multi-walled carbon nanotubes per 100 carbon nanotubes, the carbon nanotubes preferably have a specific surface area of 100 m²/g or more. When the specific surface area of the carbon nanotubes is 100 m²/g or more, sufficient electrical conductivity can be induced using a small amount of the carbon nanotubes.

In the presently disclosed uncrosslinked elastomer composition, the carbon nanotubes may include single-walled carbon nanotubes in a proportion of 51 or more single-walled carbon nanotubes per 100 carbon nanotubes. When the carbon nanotubes include single-walled carbon nanotubes in a proportion of 51 or more single-walled carbon nanotubes per 100 carbon nanotubes, a balance of electrical conductivity and hardness can be achieved while also enabling further hardness reduction compared to when multi-walled carbon nanotubes are used.

In the presently disclosed uncrosslinked elastomer composition, in a case in which the carbon nanotubes include single-walled carbon nanotubes in a proportion of 51 or more single-walled carbon nanotubes per 100 carbon nanotubes, the carbon nanotubes preferably have a G/D ratio of not less than 1 and not more than 4.

Moreover, in the presently disclosed uncrosslinked elastomer composition, in a case in which the carbon nanotubes include single-walled carbon nanotubes in a proportion of 51 or more single-walled carbon nanotubes per 100 carbon nanotubes, the carbon nanotubes preferably have a specific surface area of 600 m²/g or more. When the specific surface area of the carbon nanotubes is 600 m²/g or more, sufficient electrical conductivity can be induced using a small amount of the carbon nanotubes.

In the presently disclosed uncrosslinked elastomer composition, the carbon nanotubes preferably exhibit a convex upward shape in a t-plot obtained from an adsorption isotherm. When the carbon nanotubes exhibit a convex upward shape in a t-plot obtained from an adsorption isotherm, sufficient electrical conductivity can be induced using a small amount of the carbon nanotubes.

Moreover, the present disclosure aims to advantageously solve the problem set forth above, and a presently disclosed crosslinked product is obtained through crosslinking of any one of the uncrosslinked elastomer compositions set forth above. The crosslinked product can achieve a balance of electrical conductivity and hardness as a result of being obtained through crosslinking of any one of the uncrosslinked elastomer compositions set forth above.

The presently disclosed crosslinked product preferably has a volume resistivity of not less than 1 Ω·cm and not more than 10¹⁰ Ω·cm. When the volume resistivity of the crosslinked product is not less than 1 Ω·cm and not more than 10¹⁰ Ω·cm, the crosslinked product has excellent electrical conductivity.

### (Advantageous Effect)

According to the present disclosure, it is possible to provide an uncrosslinked elastomer composition that can form a crosslinked product having an excellent balance of electrical conductivity and hardness, and also to provide a crosslinked product having an excellent balance of electrical conductivity and hardness.

### BRIEF DESCRIPTION OF THE DRAWING

In the accompanying drawing,

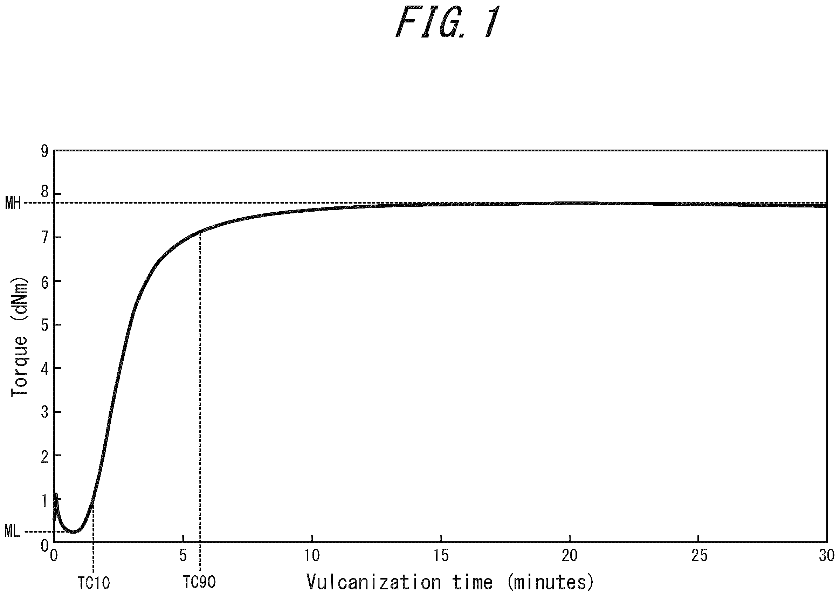

FIG. 1 is a graph for explanation of a vulcanization curve.

### DETAILED DESCRIPTION

The following provides a detailed description of embodiments of the present disclosure.

### (Uncrosslinked elastomer composition)

The presently disclosed uncrosslinked elastomer composition contains an elastomer composition P and a liquid additive Q. The elastomer composition P contains an elastomer and one or more fibrous carbon nanostructures, and further contains one or more spherical conductive carbon structures, other additives, and so forth as necessary. In other words, the make-up of the elastomer composition P is a make-up in which the liquid additive Q is excluded from the uncrosslinked elastomer composition.

### <Vulcanization curve>

The following describes a vulcanization curve with reference to FIG. 1.

FIG. 1 illustrates a vulcanization curve for the uncrosslinked elastomer composition. The vulcanization curve can be determined using a curemeter that is in accordance with JIS K 6300-2. As illustrated in FIG. 1, the vulcanization curve is a graph that has vulcanization time (units: min (minutes)) on a horizontal axis and torque (units: dNm) on a vertical axis and that indicates a relationship between the vulcanization time and the torque. On the vulcanization curve illustrated in FIG. 1, a minimum value of the torque is taken to be "ML (units: dNm)" and a maximum value of the torque is taken to be "MH (units: dNm)". Moreover, TC90 is a vulcanization time (units: min) at which the torque is equivalent to 90% of the difference between the maximum value MH and the minimum value ML of the torque, added to the minimum value ML, and TC10 is a vulcanization time (units: min) at which the torque is equivalent to 10% of the difference between the maximum value MH and the minimum value ML of the torque, added to the minimum value ML.

Note that a vulcanization curve for the elastomer composition P exhibits a similar shape to the vulcanization curve for the uncrosslinked elastomer composition. On the vulcanization curve for the elastomer composition P, a minimum value of the torque is taken to be "ML_{P} (units: dNm)" and a maximum value of the torque is taken to be "MH_{P} (units: dNm)". Moreover, TC90_{P} is a vulcanization time (units: min) at which the torque is equivalent to 90% of the difference between the maximum value MH_{P} and the minimum value ML_{P} of the torque, added to the minimum value ML_{P}, and TC10_{P} is a vulcanization time (units: min) at which the torque is equivalent to 10% of the difference between the maximum value MH_{P} and the minimum value ML_{P} of the torque, added to the minimum value ML_{P}.

Furthermore, in a case in which neither the uncrosslinked elastomer composition nor the elastomer composition P contains a vulcanizing agent or the like as an optional component (i.e., a case in which they cannot be vulcanized), the same vulcanizing agent or the like is added to both the uncrosslinked elastomer composition and the elastomer composition P to enable vulcanization.

### «Ratio A2/A1»

A ratio A2/A1 is not specifically limited so long as it is 1.1 or more, but is preferably 1.3 or more, and more preferably 1.4 or more, and is preferably 20 or less, more preferably 15 or less, even more preferably 10 or less, and particularly preferably 6.9 or less. Through the ratio A2/A1 being within any of the numerical ranges set forth above, hardness of a crosslinked product of the uncrosslinked elastomer composition can be reduced and electrical conductivity of the crosslinked product can be improved.

Note that the "ratio A2/A1" expresses the "ease of flow of a fibrous carbon material (ease of aggregation of fibrous carbon material) during vulcanization".

### <Elastomer>

The elastomer is not specifically limited and can be natural rubber; acrylic rubber; a conjugated diene rubber such as butadiene rubber, styrene butadiene rubber, or isoprene rubber; nitrile rubber (NBR; acrylonitrile butadiene rubber); hydrogenated nitrile rubber (H-NBR; hydrogenated acrylonitrile butadiene rubber); a fluorine-containing elastomer (fluororubber) such as vinylidene fluoride rubber (FKM) or tetrafluoroethylene-propylene rubber (FEPM); chloroprene rubber; ethylene propylene rubber; halogenated butyl rubber; polyisobutylene rubber; silicone rubber; ethylene-propylene-diene rubber (EPDM); or the like, for example. One of these elastomers may be used individually, or two or more of these elastomers may be used in combination. Of these examples, a fluorine-containing elastomer (fluororubber) is more preferable as the elastomer. This is because a fluorine-containing elastomer has excellent heat resistance and chemical resistance.

### <Fibrous carbon nanostructures>

The fibrous carbon nanostructures may be composed of just carbon nanotubes (hereinafter, also referred to as "CNTs") or may be a mixture of CNTs and fibrous carbon nanostructures other than CNTs.

Note that single-walled carbon nanotubes (SWCNTs) and/or multi-walled carbon nanotubes (MWCNTs) can be used without any specific limitations as CNTs among the fibrous carbon nanostructures. The CNTs may include multi-walled carbon nanotubes in a proportion of 51 or more multi-walled carbon nanotubes per 100 CNTs, or may include single-walled carbon nanotubes in a proportion of 51 or more single-walled carbon nanotubes per 100 CNTs.

The CNTs are preferably carbon nanotubes having from 1 to 5 walls, and are more preferably single-walled carbon nanotubes. This is because physical properties such as mechanical strength of a crosslinked product of the uncrosslinked elastomer composition can be further improved by using single-walled carbon nanotubes as compared to when multi-walled carbon nanotubes are used.

The total surface area B of the fibrous carbon nanostructures contained per 100 mass (units: g) of the elastomer is not specifically limited but is preferably 500 m² or more, and more preferably 600 m² or more, and is preferably 5,000 m² or less, more preferably 4,500 m² or less, and particularly preferably 3,000 m² or less. Through the total surface area B being 500 m² or more, electrical conductivity can be imparted to a crosslinked product of the uncrosslinked elastomer composition. On the other hand, through the total surface area B being 5,000 m² or less, addition of the liquid additive Q can improve electrical conductivity.

Note that the total surface area B referred to in the present disclosure is the product of the specific surface area (units: m²/g) of the fibrous carbon nanostructures and the mass (units: g) of the fibrous carbon nanostructures contained per 100 mass (units: g) of the elastomer.

Also note that the total surface area of the fibrous carbon nanostructures can be determined by, for example, combusting just an elastomer component in a crosslinked product under specific conditions to obtain just the fibrous carbon nanostructures.

The average diameter (Av) of the fibrous carbon nanostructures is preferably 0.5 nm or more, and more preferably 1 nm or more, and is preferably 15 nm or less, more preferably 10 nm or less, and even more preferably 5 nm or less. When the average diameter (Av) of the fibrous carbon nanostructures is 0.5 nm or more, the fibrous carbon nanostructures can be well dispersed in the uncrosslinked elastomer composition. Moreover, when the average diameter (Av) of the fibrous carbon nanostructures is 15 nm or less, physical properties of a crosslinked product of the uncrosslinked elastomer composition can be further improved.

The BET specific surface area of the fibrous carbon nanostructures is preferably 100 m²/g or more, more preferably 200 m²/g or more, even more preferably 600 m²/g or more, and particularly preferably 800 m²/g or more, and is preferably 2,500 m²/g or less, more preferably 1,400 m²/g or less, and particularly preferably 1,200 m²/g or less. When the BET specific surface area of the fibrous carbon nanostructures is not less than any of the lower limits set forth above, physical properties of a crosslinked product of the uncrosslinked elastomer composition can be further improved. Moreover, when the BET specific surface area of the fibrous carbon nanostructures is not more than any of the upper limits set forth above, the fibrous carbon nanostructures can be well dispersed in the uncrosslinked elastomer composition.

The fibrous carbon nanostructures preferably exhibit a convex upward shape in a t-plot obtained from an adsorption isotherm. In particular, it is preferable that the fibrous carbon nanostructures have not undergone opening formation treatment and exhibit a convex upward shape in a t-plot. By using fibrous carbon nanostructures that exhibit a convex upward shape in a t-plot obtained from an adsorption isotherm, physical properties of a crosslinked product of the uncrosslinked elastomer composition can be further improved.

In general, adsorption is a phenomenon in which gas molecules are taken onto a solid surface from the gas phase and is categorized as physical adsorption or chemical adsorption depending on the main cause of adsorption. The nitrogen gas adsorption method used for obtaining the t-plot utilizes physical adsorption. In general, when the adsorption temperature is kept constant, the number of nitrogen gas molecules that are adsorbed by a fibrous carbon nanostructure increases with increasing pressure. A plot of the relative pressure (ratio of pressure at adsorption equilibrium P and saturated vapor pressure P0) on a horizontal axis and the amount of adsorbed nitrogen gas on a vertical axis is referred to as an "isotherm". The isotherm is referred to as an "adsorption isotherm" in a situation in which the amount of adsorbed nitrogen gas is measured while increasing the pressure and is referred to as a "desorption isotherm" in a situation in which the amount of adsorbed nitrogen gas is measured while decreasing the pressure.

The t-plot is obtained from the adsorption isotherm measured by the nitrogen gas adsorption method by converting the relative pressure to an average thickness t (nm) of an adsorbed layer of nitrogen gas. Specifically, an average adsorbed nitrogen gas layer thickness t corresponding to a given relative pressure is calculated from a known standard isotherm of average adsorbed nitrogen gas layer thickness t plotted against relative pressure P/P0 and the relative pressure is converted to the corresponding average adsorbed nitrogen gas layer thickness t to obtain a t-plot for the fibrous carbon nanostructures (t-plot method of de Boer et al.).

In the case of a sample having pores at the surface thereof, growth of the adsorbed layer of nitrogen gas is categorized into the following processes (1) to (3). The gradient of the t-plot changes in accordance with processes (1) to (3).
(1) A process in which a single molecular adsorption layer of nitrogen molecules is formed over the entire surface
(2) A process in which a multi-molecular adsorption layer is formed and is accompanied by capillary condensation filling of pores
(3) A process in which a multi-molecular adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When fibrous carbon nanostructures have a t-plot shape such as described above, this indicates that the fibrous carbon nanostructures have a large ratio of internal specific surface area relative to total specific surface area and that there is a large number of openings in carbon nanostructures constituting the fibrous carbon nanostructures.

A bending point of the t-plot for the fibrous carbon nanostructures is preferably within a range satisfying 0.2 ≤ t (nm) ≤ 1.5, more preferably within a range satisfying 0.45 ≤ t (nm) ≤ 1.5, and particularly preferably within a range satisfying 0.55 ≤ t (nm) ≤ 1.0. When the position of the bending point of the t-plot is within any of the ranges set forth above, physical properties of a crosslinked product of the uncrosslinked elastomer composition can be further improved because characteristics of the fibrous carbon nanostructures are further improved.

The "position of the bending point" in the t-plot is the intersection point of a linear approximation A of the previously described process (1) and a linear approximation B of the previously described process (3).

A ratio (S2/S1) of internal specific surface area S2 of the fibrous carbon nanostructures relative to total specific surface area S1 of the fibrous carbon nanostructures obtained from the t-plot is preferably 0.05 or more, more preferably 0.06 or more, and even more preferably 0.08 or more, and is preferably 0.30 or less. When S2/S1 is not less than 0.05 and not more than 0.30, physical properties of a crosslinked product of the uncrosslinked elastomer composition can be further improved because characteristics of the fibrous carbon nanostructures can be further improved.

Note that measurement of an adsorption isotherm for fibrous carbon nanostructures, preparation of a t-plot, and calculation of total specific surface area S1 and internal specific surface area S2 based on analysis of the t-plot can be performed, for example, using a BELSORP®-mini (BELSORP is a registered trademark in Japan, other countries, or both), which is a commercially available measurement apparatus produced by Bel Japan Inc.

The fibrous carbon nanostructures are preferably fibrous carbon nanostructures for which a ratio (3σ/Av) of a value (3σ) obtained by multiplying the diameter standard deviation (σ) of the fibrous carbon nanostructures by 3, relative to the average diameter (Av) of the fibrous carbon nanostructures, is more than 0.20 and less than 0.80, more preferably fibrous carbon nanostructures for which 3σ/Av is more than 0.25, even more preferably fibrous carbon nanostructures for which 3σ/Av is more than 0.40, and particularly preferably fibrous carbon nanostructures for which 3σ/Av is more than 0.50. By using fibrous carbon nanostructures for which 3σ/Av is more than 0.20 and less than 0.80, physical properties of a crosslinked product of the uncrosslinked elastomer composition can be further improved.

The "average diameter (Av) of the fibrous carbon nanostructures" and the "diameter standard deviation (σ: sample standard deviation) of the fibrous carbon nanostructures" can each be determined by measuring the diameters (external diameters) of 100 randomly selected fibrous carbon nanostructures using a transmission electron microscope. The average diameter (Av) and standard deviation (σ) of the fibrous carbon nanostructures may be adjusted by altering the production method or production conditions of the fibrous carbon nanostructures, or by combining a plurality of types of fibrous carbon nanostructures obtained by different production methods.

Fibrous carbon nanostructures having the properties set forth above can be efficiently produced by, for example, in a method in which, during synthesis of CNTs through chemical vapor deposition (CVD) by supplying a feedstock compound and a carrier gas onto a substrate having a catalyst layer for carbon nanotube production at the surface thereof, a trace amount of an oxidizing agent (catalyst activating material) is provided in the system to dramatically improve the catalytic activity of the catalyst layer (super growth method; refer to WO2006/011655A1), forming the catalyst layer at the surface of the substrate by a wet process. Hereinafter, carbon nanotubes that are obtained by the super growth method are also referred to as "SGCNTs".

A ratio (G/D ratio) of G-band peak relative to D-band peak intensity in a Raman spectrum of the carbon nanotubes (CNTs) is preferably not less than 0.5 and not more than 4, more preferably not less than 1.0 and not more than 4, and particularly preferably not less than 2.0 and not more than 3.0. When the G/D ratio is not less than 0.5 and not more than 4, electrical conductivity and mechanical characteristics of a crosslinked product of an uncrosslinked elastomer composition that is produced using a carbon nanotube dispersion liquid can be sufficiently improved even when the amount of CNTs is small.

The aspect ratio of the fibrous carbon nanostructures is not specifically limited but is preferably 10 or more, more preferably 20 or more, and particularly preferably 50 or more, and is preferably 200,000 or less. Through the aspect ratio of the fibrous carbon nanostructures being 10 or more, high electrical conductivity can be achieved using a small amount of the fibrous carbon nanostructures.

The content of the fibrous carbon nanostructures per 100 parts by mass of the elastomer is preferably adjusted so as to satisfy the following relationship Y.
Relationship Y: Total surface area B (units: m²) of fibrous carbon nanostructures contained per 100 mass (units: g) of elastomer is 500 ≤ B ≤ 5,000

### <Liquid additive>

The liquid additive is not specifically limited and can be a liquid elastomer such as a liquid fluororubber or liquid silicone rubber; a plasticizer such as di-2-ethylhexyl phthalate (DEHP) or diisononyl phthalate (DINP); an oil such as fluorinated oil or silicone oil; or the like, for example. One of these liquid additives may be used individually, or two or more of these liquid additives may be used in combination. Of these examples, a liquid elastomer is preferable as the liquid additive, and a fluorine-containing liquid elastomer is more preferable as the liquid additive. This is because a fluorine-containing liquid elastomer is crosslinkable and has high compatibility with a fluororubber, and thus can maintain the strength of a crosslinked product of the uncrosslinked elastomer.

The liquid additive is preferably of the same type as the previously described elastomer from a viewpoint of compatibility.

The content of the liquid additive per 100 parts by mass of the elastomer is not specifically limited but is preferably 1 part by mass or more, more preferably 2 parts by mass or more, even more preferably 5 parts by mass or more, and particularly preferably 10 parts by mass or more, and is preferably less than 80 parts by mass, more preferably 70 parts by mass or less, and particularly preferably 60 parts by mass or less. Through the content of the liquid additive being 1 part by mass or more, electrical conductivity of the uncrosslinked elastomer composition can be improved. On the other hand, through the content of the liquid additive being less than 80 parts by mass, processability of the uncrosslinked elastomer composition can be well maintained.

### <Spherical conductive carbon structures>

Ketjenblack, carbon black, acetylene black, or the like, for example, can be used without any specific limitations as spherical conductive carbon structures. One of these types of spherical conductive carbon structures may be used individually, or two or more of these types of spherical conductive carbon structures may be used in combination. Of these examples, Ketjenblack is preferable as the spherical conductive carbon structures. This is because high electrical conductivity can be achieved using a small amount thereof.

The aspect ratio of the spherical conductive carbon structures is not specifically limited but is preferably 1.0 or more, more preferably 1.2 or more, and particularly preferably 1.5 or more, and is preferably 10.0 or less, more preferably 9.0 or less, and particularly preferably 8.0 or less. Through the aspect ratio of the spherical conductive carbon structures being 10.0 or less, a good dispersion state can be achieved in the uncrosslinked elastomer composition.

The content of the spherical conductive carbon structures per 100 parts by mass of the elastomer is not specifically limited but is preferably 3 parts by mass or more, more preferably 4 parts by mass or more, and particularly preferably 5 parts by mass or more, and is preferably 80 parts by mass or less, more preferably 70 parts by mass or less, and particularly preferably 60 parts by mass or less. Through the content of the spherical conductive carbon structures being 3 parts by mass or more, electrical conductivity of the uncrosslinked elastomer composition can be improved. On the other hand, through the content of the spherical conductive carbon structures being 80 parts by mass or less, processability of the uncrosslinked elastomer composition can be well maintained.

The overall total surface area of the fibrous carbon nanostructures and the spherical conductive carbon structures contained per 100 mass (units: g) of the elastomer is not specifically limited but is preferably 500 m² or more, more preferably 700 m² or more, even more preferably 1,000 m² or more, and particularly preferably 2,000 m² or more, and is preferably 10,000 m² or less, more preferably 9,000 m² or less, and particularly preferably 8,000 m² or less. Through the overall total surface area being 500 m² or more, electrical conductivity of the uncrosslinked elastomer composition can be improved. On the other hand, through the overall total surface area being 8,000 m² or less, processability of the uncrosslinked elastomer composition can be well maintained.

Note that the overall total surface area of the fibrous carbon nanostructures and the spherical conductive carbon structures referred to in the present disclosure is obtained by adding: the product of the specific surface area (units: m²/g) of the fibrous carbon nanostructures and the mass (units: g) of the fibrous carbon nanostructures contained per 100 mass (units: g) of the elastomer; and the product of the specific surface area of the spherical conductive carbon structures (units: m²/g) and the mass (units: g) of the spherical conductive carbon structures contained per 100 mass (units: g) of the elastomer.

### <Other additives>

The presently disclosed uncrosslinked elastomer composition may optionally further contain known additives such as fillers other than fibrous carbon nanostructures and spherical conductive carbon structures, crosslinkers, crosslinking aids, and antioxidants.

Examples of fillers that can be used include, but are not specifically limited to, particulate inorganic materials such as silica particles.

Examples of crosslinkers that can be used include, but are not specifically limited to, known crosslinkers that can crosslink an elastomer such as previously described. More specifically, sulfur, a derivative of sulfur, triallyl isocyanurate, or 2,5-di(t-butylperoxy)hexane, for example, can be used as a crosslinker.

Moreover, examples of crosslinking aids that can be used include, but are not specifically limited to, zinc oxide (zinc white) and stearic acid.

One of these additives may be used individually, or two or more of these additives may be used in combination. The amount of an additive that is used can be any amount so long as it does not impair expression of desired effects.

### <Production of uncrosslinked elastomer composition>

The uncrosslinked elastomer composition can be produced according to any method without any specific limitations. As one example, the uncrosslinked elastomer composition can be produced by obtaining a masterbatch that is a mixture of the elastomer and the fibrous carbon nanostructures, and subsequently kneading the liquid additive Q, and also the spherical conductive carbon structures and other additives that are optional components, with the obtained masterbatch.

The masterbatch that is a mixture of the elastomer and the fibrous carbon nanostructures can be produced by any mixing method that enables dispersion of the fibrous carbon nanostructures in the elastomer. Specifically, the masterbatch can be produced by, without any specific limitations, adding the fibrous carbon nanostructures to an elastomer solution obtained by dissolving the elastomer in an organic solvent or an elastomer dispersion liquid obtained by dispersing the elastomer in a dispersion medium, subsequently using a high-speed emulsifying and dispersing device, a wet jet mill, or the like to perform dispersing treatment of the fibrous carbon nanostructures to produce a slurry, and then removing the organic solvent or the dispersion medium from a dispersing treatment liquid that is obtained as the slurry. Note that removal of the solvent or dispersion medium can be performed by coagulation, casting, or drying, for example. Alternatively, it is of course possible to produce the masterbatch by directly kneading the elastomer and the fibrous carbon nanostructure by a known kneading method such as described below without using a solvent.

Moreover, a mixer, a single-screw kneader, a twin-screw kneader, a roll, a Brabender, an extruder, or the like, for example, can be used in addition and kneading of the liquid additive Q, and also the spherical conductive carbon structures and other additives that are optional components, with the masterbatch that is obtained as described above. The kneading conditions can be adjusted as appropriate so as to enable a suitable degree of dispersion of the fibrous carbon nanostructures.

Note that the uncrosslinked elastomer containing both the "elastomer composition P containing the elastomer, the fibrous carbon nanostructures, and the spherical conductive carbon structures and other additives that are optional components" and the "liquid additive Q" can be produced by, for example, mixing or kneading the elastomer, the fibrous carbon nanostructures, the liquid additive Q, and the spherical conductive carbon structures and other additives that are optional components in a desired mixing ratio.

### (Crosslinked product)

The presently disclosed crosslinked product is obtained through crosslinking of the presently disclosed uncrosslinked elastomer composition set forth above.

It is preferable that the uncrosslinked elastomer composition obtained as described above is shaped into a desired shape and is converted to a crosslinked product. By converting the uncrosslinked elastomer composition to a crosslinked product, desired attributes can be imparted to the obtained crosslinked product.

Note that the crosslinking may be performed through one stage of just primary crosslinking, through two stages of primary crosslinking and secondary crosslinking such as described in the EXAMPLES section, or through three or more stages. The following describes the crosslinking conditions. The described conditions are crosslinking conditions in each of the stages.

### <Crosslinking conditions>

The crosslinking conditions can be set as appropriate depending on the shape of the target crosslinked product, the types and amounts of used additives, and so forth. For example, the temperature during crosslinking can be 140°C to 250°C, the pressure during crosslinking can be 1 MPa to 20 MPa, and the duration of crosslinking can be 1 minute to 180 minutes.

### <Volume resistivity of crosslinked product>

The volume resistivity of the crosslinked product is not specifically limited but is preferably 1 Ω·cm or more, more preferably 2 Ω·cm or more, even more preferably 5 Ω·cm or more, and particularly preferably 10 Ω·cm or more, and is preferably 10¹⁰ Ω·cm or less, more preferably 10⁹ Ω·cm or less, even more preferably 10⁸ Ω·cm or less, and particularly preferably 2,000 Ω·cm or less. Through the volume resistivity of the crosslinked product being 10¹⁰ Ω·cm or less, sufficient electrical conductivity for static prevention can be imparted.

### <Hardness of crosslinked product>

The hardness of the crosslinked product is not specifically limited but is preferably 50 or more, more preferably 52 or more, and particularly preferably 55 or more, and is preferably 90 or less, more preferably 88 or less, even more preferably 85 or less, and particularly preferably 80 or less. Through the hardness of the crosslinked product being within any of the numerical ranges set forth above, processability of the uncrosslinked elastomer composition can be well maintained.

### EXAMPLES

The following provides a more detailed description of the present disclosure through examples. However, the present disclosure is not in any way limited to the following examples. In the following description, "%" and "parts" used in expressing quantities are by mass, unless otherwise specified. The following methods were used in the examples and comparative examples to measure or evaluate the total surface area of fibrous carbon nanostructures, the overall total surface area of fibrous carbon nanostructures and spherical conductive carbon structures, a vulcanization curve for an elastomer composition P, a vulcanization curve for an uncrosslinked elastomer composition, the hardness of a crosslinked product, and the electrical conductivity (volume resistivity) of a crosslinked product.

### <Total surface area of fibrous carbon nanostructures>

The total surface area of fibrous carbon nanostructures is the product of the specific surface area (units: m²/g) of the fibrous carbon nanostructures and the mass (units: g) of the fibrous carbon nanostructures contained per 100 mass (units: g) of an elastomer. The measurement results are shown in Table 1.

### <Overall total surface area of fibrous carbon nanostructures and spherical conductive carbon structures>

The overall total surface area of fibrous carbon nanostructures and spherical conductive carbon structures is obtained by adding: the product of the specific surface area (units: m²/g) of the fibrous carbon nanostructures and the mass (units: g) of the fibrous carbon nanostructures contained per 100 mass (units: g) of an elastomer; and the product of the specific surface area (units: m²/g) of the spherical conductive carbon structures and the mass (units: g) of the spherical conductive carbon structures contained per 100 mass (units: g) of the elastomer. The measurement results are shown in Table 1.

### <Vulcanization curve for elastomer composition P and vulcanization curve for uncrosslinked elastomer composition>

For each "elastomer composition P" and "uncrosslinked elastomer composition" obtained in the examples and comparative examples, an oscillating curemeter in accordance with JIS K 6300-2 (Rheometer MDR 2000P produced by Alpha Technologies) was used to obtain a vulcanization curve with torque (dNm) on a vertical axis and vulcanization time (min (minutes)) on a horizontal axis, under conditions of a frequency of 1.667 Hz, a dynamic amplitude of ±0.5%, a temperature of 160°C, and a time of 30 minutes.

TC90 and TC90_{P} (units: min), TC10 and TC10_{P} (units: min), and ML and ML_{P} (units: dNm) were determined for the obtained vulcanization curves, and the value of A2/A1 was calculated. The results are shown in Table 1.

### <Hardness of crosslinked product>

Each crosslinked rubber sheet obtained as a crosslinked product in the examples and comparative examples was punched in a dumbbell test specimen shape (JIS No. 3) to obtain a test specimen. An automatic rubber durometer (PI produced by Kobunshi Keiki Co., Ltd.) was used to measure the hardness of the test specimen in accordance with JIS K6253-3:2012 under conditions of a test temperature of 23°C and a test humidity of 50%. The measurement results are shown in Table 1.

### <Electrical conductivity (volume resistivity) of crosslinked product>

The volume resistivity (Ω·cm) of each crosslinked rubber sheet obtained as a crosslinked product in the examples and comparative examples was measured using a resistivity meter (Loresta-GX MCP-T700 produced by Mitsubishi Chemical Analytech Co., Ltd.) and an LSP probe. The measurement results are shown in Table 1.

### (Example 1)

A fluororubber solution was produced by adding 3.0 kg of a fluororubber (FKM; Viton GBL600S produced by the Chemours Company) as an "elastomer" to 27.0 kg of methyl ethyl ketone (MEK) as an organic solvent and then stirring these materials at 23°C for at least 8 hours using a stirrer to dissolve the fluororubber. Next, 120 g of carbon nanotubes (produced by Zeon Nanotechnology Co., Ltd.; product name: ZEONANO SG101; single-walled CNTs; specific gravity: 1.7; average diameter: 3.5 nm; average length: 400 µm; BET specific surface area: 1,324 m²/g; G/D ratio: 2.1; t-plot: convex upward) as "fibrous carbon nanostructures" were added to the fluororubber solution and were stirred therewith for 10 minutes by a stirrer.

Thereafter, a high-pressure dispersing device (Nano Jet Pul® JN1000 (Nano Jet Pul is a registered trademark in Japan, other countries, or both) produced by Jokoh Co., Ltd.) was used to perform 5 repetitions of dispersing treatment at a pressure of 10 MPa, followed by 5 repetitions of dispersing treatment at a pressure of 100 MPa, to obtain a dispersing treatment liquid. Next, the obtained dispersing treatment liquid was added dropwise to 120 kg of water to cause coagulation and obtain a black solid. The obtained black solid was dried under reduced pressure at 80°C for 12 hours to obtain a mixture of the fluororubber and CNTs (100 parts by mass of fluororubber:4 parts by mass of CNTs).

Thereafter, a water-cooled open roll mill was used to knead 13 parts by mass of the mixture of the fluororubber and CNTs, 87.5 parts by mass of the fluororubber, 5 parts by mass of a liquid fluororubber (DAI-EL G-101 produced by Daikin Industries, Ltd.) as a "liquid additive Q", 3 parts by mass of zinc oxide (JIS Grade 2 zinc white), 3 parts by mass of triallyl isocyanurate (TAIC® (TAIC is a registered trademark in Japan, other countries, or both) produced by Nippon Kasei Chemical Co., Ltd.) as a first crosslinker, and 2 parts by mass of 2,5-dimethyl-2,5-di(t-butylperoxy)hexane (PERHEXA® 25B40 (PERHEXA is a registered trademark in Japan, other countries, or both) produced by NOF Corporation) as a second crosslinker to obtain a rubber composition as an "uncrosslinked elastomer composition".

The obtained rubber composition (uncrosslinked elastomer composition) was crosslinked (primary crosslinking) at a temperature of 160°C and a pressure of 10 MPa for 15 minutes to obtain a primary crosslinked product having a sheet shape of 2 mm in thickness.

Next, the obtained sheet-shaped crosslinked product was crosslinked (secondary crosslinking) at 232°C for 2 hours to obtain a crosslinked rubber sheet as the presently disclosed "crosslinked product".

In addition, an "elastomer composition P (13 parts by mass of mixture of fluororubber and CNTs:87.5 parts by mass of fluororubber:3 parts by mass of zinc oxide:3 parts by mass of triallyl isocyanurate:2 parts by mass of 2,5-dimethyl-2,5-di(t-butylperoxy)hexane)" was obtained in the same way as in production of the rubber composition as the "uncrosslinked elastomer composition" in Example 1 with the exception that in production of the rubber composition as the "uncrosslinked elastomer composition" in Example 1, 5 parts by mass of a liquid fluororubber was not added as a "liquid additive Q".

The obtained elastomer composition P, rubber composition (uncrosslinked elastomer composition), and crosslinked rubber sheet (crosslinked product) were used to measure or evaluate the total surface area of the fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product by the previously described methods.

### (Example 2)

An elastomer composition P, a rubber composition (uncrosslinked elastomer composition), and a crosslinked rubber sheet (crosslinked product) were obtained, and the total surface area of fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product were measured or evaluated in the same way as in Example 1 with the exception that the additive amount of the liquid fluororubber in Example 1 was changed from 5 parts by mass to 10 parts by mass.

### (Example 3)

An elastomer composition P, a rubber composition (uncrosslinked elastomer composition), and a crosslinked rubber sheet (crosslinked product) were obtained, and the total surface area of fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product were measured or evaluated in the same way as in Example 1 with the exception that the additive amount of the liquid fluororubber in Example 1 was changed from 5 parts by mass to 60 parts by mass.

### (Example 4)

An elastomer composition P, a rubber composition (uncrosslinked elastomer composition), and a crosslinked rubber sheet (crosslinked product) were obtained, and the total surface area of fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product were measured or evaluated in the same way as in Example 2 with the exception that instead of using 13 parts by mass of the mixture of the fluororubber and CNTs and 87.5 parts by mass of the fluororubber in Example 2, 52 parts by mass of the mixture of the fluororubber and CNTs and 50 parts by mass of the fluororubber were used.

### (Example 5)

An MWCNT/rubber masterbatch was obtained by wrapping 100 parts by mass of a fluororubber (FKM; Viton GBL600S produced by the Chemours Company) around a water-cooled open roll mill and kneading 15 parts by mass of MWCNTs (K-nanos produced by Kumho Petrochemical; BET specific surface area: 250 m²/g) therewith.

Thereafter, a water-cooled open roll mill was used to knead 23 parts by mass of the MWCNT/rubber masterbatch, 80.0 parts by mass of the fluororubber, 10 parts by mass of a liquid fluororubber (DAI-EL G-101 produced by Daikin Industries, Ltd.) as a "liquid additive Q", 3 parts by mass of zinc oxide (JIS Grade 2 zinc white), 3 parts by mass of triallyl isocyanurate (TAIC® produced by Nippon Kasei Chemical Co., Ltd.) as a first crosslinker, and 2 parts by mass of 2,5-dimethyl-2,5-di(t-butylperoxy)hexane (PERHEXA® 25B40 produced by NOF Corporation) as a second crosslinker to obtain a rubber composition as an "uncrosslinked elastomer composition".

The obtained rubber composition (uncrosslinked elastomer composition) was crosslinked (primary crosslinking) at a temperature of 160°C and a pressure of 10 MPa for 15 minutes to obtain a primary crosslinked product having a sheet shape of 2 mm in thickness. Next, the obtained sheet-shaped crosslinked product was crosslinked (secondary crosslinking) at 232°C for 2 hours to obtain a crosslinked rubber sheet as the presently disclosed "crosslinked product".

In addition, an "elastomer composition P (23 parts by mass of MWCNT/rubber masterbatch:80 parts by mass of fluororubber:3 parts by mass of zinc oxide:3 parts by mass of triallyl isocyanurate:2 parts by mass of 2,5-dimethyl-2,5-di(t-butylperoxy)hexane)" was obtained in the same way as in production of the rubber composition as the "uncrosslinked elastomer composition" in Example 5 with the exception that in production of the rubber composition as the "uncrosslinked elastomer composition" in Example 5, 10 parts by mass of a liquid fluororubber was not added as a "liquid additive Q".

The obtained elastomer composition P, rubber composition (uncrosslinked elastomer composition), and crosslinked rubber sheet (crosslinked product) were used to measure or evaluate the total surface area of the fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product by the previously described methods.

### (Example 6)

An elastomer composition P, a rubber composition (uncrosslinked elastomer composition), and a crosslinked rubber sheet (crosslinked product) were obtained, and the total surface area of fibrous carbon nanostructures, a vulcanization curve for the elastomer composition P, a vulcanization curve for the uncrosslinked elastomer composition, the hardness of the crosslinked product, and the electrical conductivity (volume resistivity) of the crosslinked product were measured or evaluated in the same way as in Example 5 with the exception that instead of using 23 parts by mass of the MWCNT/rubber masterbatch and 80 parts by mass of the fluororubber in Example 5, 38.3 parts by mass of the MWCNT/rubber masterbatch and 66.7 parts by mass of the fluororubber were used.

### (Example 7)

A mixture of a fluororubber and CNTs (100 parts by mass of fluororubber:4 parts by mass of CNTs) was obtained in the same way as in Example 1.

Thereafter, a water-cooled open roll mill was used to knead 26 parts by mass of the mixture of the fluororubber and CNTs, 75 parts by mass of the fluororubber, 3 parts by mass of Ketjenblack (EC300JD produced by Lion Corporation), 10 parts by mass of a liquid fluororubber (DAI-EL G-101 produced by Daikin Industries, Ltd.) as a "liquid additive Q", 3 parts by mass of zinc oxide (JIS Grade 2 zinc white), 3 parts by mass of triallyl isocyanurate (TAIC® produced by Nippon Kasei Chemical Co., Ltd.) as a first crosslinker, and 2 parts by mass of 2,5-dimethyl-2,5-di(t-butylperoxy)hexane (PERHEXA® 25B40 produced by NOF Corporation) as a second crosslinker to obtain a rubber composition as an "uncrosslinked elastomer composition".

The obtained rubber composition (uncrosslinked elastomer composition) was crosslinked (primary crosslinking) at a temperature of 160°C and a pressure of 10 MPa for 15 minutes to obtain a primary crosslinked product having a sheet shape of 2 mm in thickness. Next, the obtained sheet-shaped crosslinked product was crosslinked (secondary crosslinking) at 232°C for 2 hours to obtain a crosslinked rubber sheet as the presently disclosed "crosslinked product".

In addition, an "elastomer composition P (26 parts by mass of mixture of fluororubber and CNTs:75 parts by mass of fluororubber:3 parts by mass of Ketjenblack:3 parts by mass of zinc oxide:3 parts by mass of triallyl isocyanurate:2 parts by mass of 2,5-dimethyl-2,5-di(t-butylperoxy)hexane)" was obtained in the same way as in production of the rubber composition as the "uncrosslinked elastomer composition" in Example 7 with the exception that in production of the rubber composition as the "uncrosslinked elastomer composition" in Example 7, 10 parts by mass of a liquid fluororubber was not added as a "liquid additive Q".

The obtained elastomer composition P, rubber composition (uncrosslinked elastomer composition), and crosslinked rubber sheet (crosslinked product) were used to measure or evaluate the overall total surface area of the fibrous carbon nanostructures and spherical conductive carbon structures, a vulcanization curve for the elastomer composition P, a vulcanization curve for the uncrosslinked elastomer composition, the hardness of the crosslinked product, and the electrical conductivity (volume resistivity) of the crosslinked product by the previously described methods.

### (Comparative Example 1)

A rubber composition (uncrosslinked elastomer composition) and a crosslinked rubber sheet (crosslinked product) were obtained, and the total surface area of fibrous carbon nanostructures, a vulcanization curve for the uncrosslinked elastomer composition (elastomer composition P), the hardness of the crosslinked product, and the electrical conductivity (volume resistivity) of the crosslinked product were measured or evaluated in the same way as in Example 1 with the exception that the additive amount of the liquid fluororubber in Example 1 was changed from 5 parts by mass to 0 parts by mass, and thus the liquid fluororubber was not added.

### (Comparative Example 2)

A rubber composition (uncrosslinked elastomer composition) and a crosslinked rubber sheet (crosslinked product) were obtained, and the total surface area of fibrous carbon nanostructures, a vulcanization curve for the uncrosslinked elastomer composition (elastomer composition P), the hardness of the crosslinked product, and the electrical conductivity (volume resistivity) of the crosslinked product were measured or evaluated in the same way as in Example 4 with the exception that the additive amount of the liquid fluororubber in Example 4 was changed from 10 parts by mass to 0 parts by mass, and thus the liquid fluororubber was not added.

### (Comparative Example 3)

A rubber composition (uncrosslinked elastomer composition) and a crosslinked rubber sheet (crosslinked product) were obtained, and the total surface area of fibrous carbon nanostructures, a vulcanization curve for the uncrosslinked elastomer composition (elastomer composition P), the hardness of the crosslinked product, and the electrical conductivity (volume resistivity) of the crosslinked product were measured or evaluated in the same way as in Example 5 with the exception that the additive amount of the liquid fluororubber in Example 5 was changed from 10 parts by mass to 0 parts by mass, and thus the liquid fluororubber was not added.

### (Comparative Example 4)

A rubber composition (uncrosslinked elastomer composition) and a crosslinked rubber sheet (crosslinked product) were obtained, and the total surface area of fibrous carbon nanostructures, a vulcanization curve for the uncrosslinked elastomer composition (elastomer composition P), the hardness of the crosslinked product, and the electrical conductivity (volume resistivity) of the crosslinked product were measured or evaluated in the same way as in Example 6 with the exception that the additive amount of the liquid fluororubber in Example 6 was changed from 10 parts by mass to 0 parts by mass, and thus the liquid fluororubber was not added.

### (Comparative Example 5)

A rubber composition (uncrosslinked elastomer composition) and a crosslinked rubber sheet (crosslinked product) were obtained, and the overall total surface area of fibrous carbon nanostructures and spherical conductive carbon structures, a vulcanization curve for the uncrosslinked elastomer composition (elastomer composition P), the hardness of the crosslinked product, and the electrical conductivity (volume resistivity) of the crosslinked product were measured or evaluated in the same way as in Example 7 with the exception that the additive amount of the liquid fluororubber in Example 7 was changed from 10 parts by mass to 0 parts by mass, and thus the liquid fluororubber was not added.

The results of the above are shown below in Table 1.

**Table 1**

| | | | | | | | | | | | | | | | | |
|---|---|---|---|---|---|---|---|---|---|---|---|---|---|---|---|---|
| Uncro sslinked composition | | | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
| | Elastomer composition P | Elastomer | Fluorine-containing elastomer GBL600S | [Parts by mass] | 100 | 100 | 100 | 100 | 100 | 100 | 100 | 100 | 100 | 100 | 100 | 100 |
| | | Fibrous carbon nano structures | SGCNTs | [Parts by mass] | 0.5 | 0.5 | 0.5 | 2 | - | - | 1 | 0.5 | 2 | - | - | 1 |
| | | | MWCNTs | [Parts by mass] | - | - | - | - | 3 | 5 | - | - | - | 3 | 5 | - |
| | Liquid additive Q | | Liquid fluorine-containing elastomer G101 | [Parts by mass] | 5 | 10 | 60 | 10 | 10 | 10 | 10 | - | - | - | - | - |
| | Elastomer composition P | Spherical conductive carbon structures | Ketjenblack | [Parts by mass] | - | - | - | - | - | - | 3 | - | - | - | - | 3 |
| | | Additives | Zinc oxide | [Parts by mass] | 3 | 3 | 3 | 3 | 3 | 3 | 3 | 3 | 3 | 3 | 3 | 3 |
| | | | TAIC | [Parts by mass] | 3 | 3 | 3 | 3 | 3 | 3 | 3 | 3 | 3 | 3 | 3 | 3 |
| | | | PERHEXA 25B40 | [Parts by mass] | 2 | 2 | 2 | 2 | 2 | 2 | 2 | 2 | 2 | 2 | 2 | 2 |
| Parameters | Total surface area of CNTs (m²) | | | | 662 | 662 | 662 | 2648 | 750 | 1250 | - | 662 | 2648 | 750 | 1250 | - |
| | Overall total surface area of CNTs and Ketjenblack (m²) | | | | - | - | - | - | - | - | 2400 | - | - | - | - | 2400 |
| | ML on vulcanization curve of uncrosslinked composition (dNm) | | | | 1.1 | 1.0 | 0.3 | 2.6 | 1.3 | 2.1 | 1.9 | 1.4 | 2.9 | 1.6 | 2.5 | 2.5 |
| | TC10 on vulcanization curve of uncrosslinked composition (min) | | | | 1.2 | 1.2 | 1.5 | 1.6 | 1.3 | 1.3 | 1.5 | 1.2 | 1.5 | 1.2 | 1.2 | 1.5 |
| | TC90 on vulcanization curve of uncrosslinked composition (min) | | | | 4.9 | 4.3 | 5.3 | 9.4 | 5.2 | 6.9 | 8.3 | 3.8 | 7.9 | 5.5 | 6.3 | 8.2 |
| | A2 ((TC90 - TC10)/ML ofuncrosslinked composition) (min/dNm) | | | | 3.4 | 3.0 | 12.6 | 3.0 | 3.0 | 2.7 | 3.6 | 1.8 | 2.2 | 2.7 | 2.0 | 2.7 |
| | ML_{P} on vulcanization curve of elastomer composition P (dNm) | | | | 1.4 | 1.4 | 1.4 | 2.9 | 1.6 | 2.5 | 2.5 | 1.4 | 2.9 | 1.6 | 2.5 | 2.5 |
| | TC10_{P} on vulcanization curve of elastomer composition P (min) | | | | 1.2 | 1.2 | 1.2 | 1.5 | 1.2 | 1.2 | 1.5 | 1.2 | 1.5 | 1.2 | 1.2 | 1.5 |
| | TC90_{P} on vulcanization curve of elastomer composition P (min) | | | | 3.8 | 3.8 | 3.8 | 7.9 | 5.5 | 6.3 | 8.2 | 3.8 | 7.9 | 5.5 | 6.3 | 8.2 |
| | A1 ((TC90_{P} - TC10_{P})/ML_{P} of elastomer composition P) (min/dNm) | | | | 1.8 | 1.8 | 1.8 | 2.2 | 2.7 | 2.0 | 2.7 | 1.8 | 2.2 | 2.7 | 2.0 | 2.7 |
| | A2/A1 | | | | 1.9 | 1.7 | 6.9 | 1.4 | 1.1 | 1.3 | 1.3 | 1.0 | 1.0 | 1.0 | 1.0 | 1.0 |
| | ML of uncrosslinked composition/ML_{P} of elastomer compositionP (dNm) | | | | 0.79 | 0.71 | 0.21 | 0.90 | 0.81 | 0.84 | 0.76 | 1.00 | 1.00 | 1.00 | 1.00 | 1.00 |
| Evaluation results | | Volume resistivity of crosslinked product [Ω·cm] | | | 1600 | 380 | 79 | 1.6 | 12 | 2.1 | 9.4 | 17000 | 1.8 | 53 | 3.2 | 9.4 |
| | | Hardness of crosslinked product | | | 64 | 64 | 51 | 79 | 68 | 76 | 72 | 64 | 81 | 70 | 77 | 75 |

As shown in Table 1, it can be seen through comparison of Examples 1 to 3 with Comparative Example 1 that electrical conductivity could be improved while also achieving a similar hardness or reduced hardness, and a crosslinked product having an excellent balance of electrical conductivity and hardness could be formed.

Moreover, it can be seen through comparison of Example 4 with Comparative Example 2 that electrical conductivity could be improved while also achieving reduced hardness, and a crosslinked product having an excellent balance of electrical conductivity and hardness could be formed.

It can be seen through comparison of Example 5 with Comparative Example 3 that electrical conductivity could be improved while also achieving reduced hardness, and a crosslinked product having an excellent balance of electrical conductivity and hardness could be formed.

It can be seen through comparison of Example 6 with Comparative Example 4 that electrical conductivity could be improved while also achieving reduced hardness, and a crosslinked product having an excellent balance of electrical conductivity and hardness could be formed.

It can be seen through comparison of Example 7 with Comparative Example 5 that electrical conductivity could be improved while also achieving reduced hardness, and a crosslinked product having an excellent balance of electrical conductivity and hardness could be formed.

As described above, the results in Table 1 demonstrate that a crosslinked product having an excellent balance of electrical conductivity and hardness can be formed by using an uncrosslinked elastomer composition that contains: an elastomer composition P containing an elastomer and fibrous carbon nanostructures; and a liquid additive Q, and that satisfies a relationship formula X of A2/A1 ≥ 1.1.

### INDUSTRIAL APPLICABILITY

According to the present disclosure, it is possible to provide an uncrosslinked elastomer composition that can form a crosslinked product having an excellent balance of electrical conductivity and hardness, and also to provide a crosslinked product that has an excellent balance of electrical conductivity and hardness.

### REFERENCE SIGNS LIST

ML: Minimum value of torque
MH: Maximum value of torque
TC90: Vulcanization time at which torque is equivalent to 90% of difference between maximum value MH and minimum value ML of torque, added to minimum value ML
TC10: Vulcanization time at which torque is equivalent to 10% of difference between maximum value MH and minimum value ML of torque, added to minimum value ML

## Claims

1. An uncrosslinked elastomer composition comprising: an elastomer composition P containing an elastomer and one or more fibrous carbon nanostructures; and a liquid additive Q, wherein
when a value of (TC90_{P} - TC10_{P})/ML_{P} for the elastomer composition P is taken to be A1 and a value of (TC90 - TC10)/ML for the uncrosslinked elastomer composition is taken to be A2,
a relationship formula X of A2/A1 ≥ 1.1 is satisfied,
given that when a vulcanization curve indicating a relationship between vulcanization time, in units of minutes, and torque, in units of dNm, is determined for the elastomer composition P, and a maximum value MH_{P} of the torque and a minimum value ML_{P} of the torque on the vulcanization curve are obtained, TC90_{P} is a vulcanization time, in units of minutes, at which the torque on the vulcanization curve for the elastomer composition P is equivalent to 90% of a difference between the maximum value MH_{P} and the minimum value ML_{P} of the torque, added to the minimum value ML_{P}, and TC10_{P} is a vulcanization time, in units of minutes, at which the torque on the vulcanization curve for the elastomer composition P is equivalent to 10% of the difference between the maximum value MH_{P} and the minimum value ML_{P} of the torque, added to the minimum value ML_{P}, and
that when a vulcanization curve indicating a relationship between vulcanization time, in units of minutes, and torque, in units of dNm, is determined for the uncrosslinked elastomer composition, and a maximum value MH of the torque and a minimum value ML of the torque on the vulcanization curve are obtained, TC90 is a vulcanization time, in units of minutes, at which the torque on the vulcanization curve for the uncrosslinked elastomer composition is equivalent to 90% of a difference between the maximum value MH and the minimum value ML of the torque, added to the minimum value ML, and TC10 is a vulcanization time, in units of minutes, at which the torque on the vulcanization curve for the uncrosslinked elastomer composition is equivalent to 10% of the difference between the maximum value MH and the minimum value ML of the torque, added to the minimum value ML.

2. The uncrosslinked elastomer composition according to claim 1, wherein total surface area B, in units of m², of the fibrous carbon nanostructures contained per 100 mass, in units of g, of the elastomer satisfies a relationship 500 ≤ B ≤ 5,000,
given that the total surface area B is the product of specific surface area, in units of m²/g, of the fibrous carbon nanostructures and mass, in units of g, of the fibrous carbon nanostructures contained per 100 mass, in units of g, of the elastomer.

3. The uncrosslinked elastomer composition according to claim 1 or 2, wherein content of the liquid additive Q is not less than 1 part by mass and less than 80 parts by mass per 100 parts by mass of the elastomer.

4. The uncrosslinked elastomer composition according to any one of claims 1 to 3, wherein the elastomer is a fluorine-containing elastomer.

5. The uncrosslinked elastomer composition according to any one of claims 1 to 4, wherein the liquid additive Q is a liquid elastomer.

6. The uncrosslinked elastomer composition according to claim 5, wherein the liquid elastomer is a fluorine-containing elastomer.

7. The uncrosslinked elastomer composition according to any one of claims 1 to 6, wherein the fibrous carbon nanostructures are carbon nanotubes.

8. The uncrosslinked elastomer composition according to claim 7, wherein the carbon nanotubes include multi-walled carbon nanotubes in a proportion of 51 or more multi-walled carbon nanotubes per 100 carbon nanotubes.

9. The uncrosslinked elastomer composition according to claim 8, wherein the carbon nanotubes have a G/D ratio of not less than 0.5 and not more than 4.

10. The uncrosslinked elastomer composition according to claim 8 or 9, wherein the carbon nanotubes have a specific surface area of 100 m²/g or more.

11. The uncrosslinked elastomer composition according to claim 7, wherein the carbon nanotubes include single-walled carbon nanotubes in a proportion of 51 or more single-walled carbon nanotubes per 100 carbon nanotubes.

12. The uncrosslinked elastomer composition according to claim 11, wherein the carbon nanotubes have a G/D ratio of not less than 1 and not more than 4.

13. The uncrosslinked elastomer composition according to claim 11 or 12, wherein the carbon nanotubes have a specific surface area of 600 m²/g or more.

14. The uncrosslinked elastomer composition according to any one of claims 7 to 13, wherein the carbon nanotubes exhibit a convex upward shape in a t-plot obtained from an adsorption isotherm.

15. A crosslinked product obtained through crosslinking of the uncrosslinked elastomer composition according to any one of claims 1 to 14.

16. The crosslinked product according to claim 15, having a volume resistivity of not less than 1 Ω·cm and not more than 10¹⁰ Ω·cm.
